(19) Europäisches Patentamt
European Patent Office
Office européen des brevets

(11) EP 0 359 524 B1

(12) EUROPEAN PATENT SPECIFICATION

(45) Date of publication and mention of the grant of the patent:
**31.01.1996 Bulletin 1996/05**

(51) Int Cl.[6]: **H01M 6/18**, H01B 1/12

(21) Application number: **89309247.8**

(22) Date of filing: **12.09.1989**

# (54) Electrolyte composition

Elektrolytzusammensetzung

Composition d'électrolyte

(84) Designated Contracting States:
**AT BE DE ES FR GB IT NL SE**

(30) Priority: **12.09.1988 US 243357**

(43) Date of publication of application:
**21.03.1990 Bulletin 1990/12**

(73) Proprietor: **MHB JOINT VENTURE**
**Miamisburg, Ohio 45342 (US)**

(72) Inventors:
- **Fauteux, Denis**
  **Centerville, OH 45459 (US)**
- **Yde-Andersen, S.**
  **DK-5260 Odense S (DK)**

(74) Representative: **Deans, Michael John Percy et al**
**London WC2R OAE (GB)**

(56) References cited:

| | |
|---|---|
| EP-A- 0 260 847 | EP-A- 0 269 018 |
| EP-A- 0 279 554 | EP-A- 0 301 774 |
| FR-A- 2 493 609 | FR-A- 2 556 139 |
| US-A- 4 728 588 | US-A- 4 792 504 |

- **DATABASE WPIL, Derwent Publications Ltd., London (GB); AN 88-152307**
- **JOURNAL OF THE ELECTROCHEMICAL SOCIETY, vol. 131, 1984; L.S. HARDY, pp. 38c-39c**
- **PATENT ABSTRACTS OF JAPAN, vol. 12, no. 80 (E-590)[2927], 12 March 1988**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 359 524 B1

## Description

The present invention relates to an electrolyte composition for an electrochemical cell.

U.S. Patent 4,303,748 to Armand et al. describes an electrochemical cell in which the electrolyte is a solid solution of an alkali metal salt within an uncrosslinked polymer derived from one or more monomers having heteroatoms.

European Patent Application 01,145,498 to Cook et al. teaches an electrolyte composition including a plasticizer (in addition to the materials described by Armand) to prevent the polymer from converting from an amorphous phase to a crystalline phase having lower conductivity than the amorphous phase. Among other plasticizing agents, the European Application discloses propylene carbonate, dimethylformamide and $\gamma$-butyrolactone. The European Patent Application further discloses that the plasticizer is generally added in an amount of 5 to 60% by weight and most preferably 25 to 40% by weight.

According to a first aspect of the present invention, there is provided an electrolyte composition for a solid state electrochemical cell, comprising: a plasticizer, a thermoplastic or thermoset polymer derived from monomers containing a heteroatom and a dissolved alkali metal salt; the composition being characterised in that the plasticizer is propylene carbonate , the polymer is polyethylene oxide and the salt is $LiCF_3SO_3$; in that propylene carbonate is present in an amount of at least 65% by weight of said composition; and in that said composition has a conductivity of at least about $1x10^{-3}ohm^{-1}cm^{-1}$.

Our compositions are useful in providing very thin electrolyte layers in an electrochemical cell such as a lithium - vanadium battery. The electrolyte composition may provide very thin electrolyte layers, for example, electrolyte layers as thin as 5μm (microns),when it is melt, extruded, solvent extruded, or solvent cast on to an anode or cathode half element.

The electrolyte composition in addition to comprising at least 65% by weight of the plasticizer, preferably has about 5 to 25% by weight of the polymer, and about 5 to 15% of the salt. The electrolyte composition provides a polymeric network which is interpenetrated by the plasticizer and the dissolved salt.

According to a second aspect of the invention, there is provided an electrochemical cell comprising a lithium electrode, a composition cathode of an insertion compound, and a layer of polymer electrode having the aforesaid composition.

The layer is suitably less than 100 μm (microns) thick and preferably about 15 to 40μm (microns) thick.

The invention also provides a process for forming an electro-chemical cell wherein the aforementioned composition is coated by extrusion, solvent casting, or the like upon an electrode half element.

Cathode and anode half elements useful in constructing electrochemical cells in accordance with the present invention are known in the art. The most typical anode is the lithium anode prepared by providing a layer of lithium metal on a metal foil (such as nickel or copper) which functions as the current collector.

The cathode half element is a composite of an insertion compound, an electronically conductive filler, and the polymer electrolyte described above.

Insertion compounds known in the art are useful in cathode compositions including electrolytes in accordance with the invention. Typical examples of insertion compounds include transition metal oxides, sulfides, and selenides, such as $V_6O_{13}$, $TiS_2$, $MnO_2$, $MoS_3$, $Cr_3O_6$, $Li_xV_3O_8$, and $V_2O_5$. The preferred materials are vanadium oxides such as $V_2O_5$ and $V_6O_{13}$. The preferred vanadium oxide compound, $V_6O_{13}$, is prepared by the thermal decomposition of ammonium metavanadate.

For electronic conductivity, the cathode composition contains an electronically conductive filler, the most typical example of which is carbon black. For ionic conductivity the polymer electrolyte is incorporated into the cathode composite. This composition is compounded in a known manner and coated on a layer of the polymer electrolyte described below or on a second metal foil member which functions as a current collector to provide the cathode.

General examples of the type of polymer with which the present invention is concerned are described in US Patent 4 303 748 to Armand and European Application 0 145 498 to Cook. These polymers have repeating units containing at least one heteratom such as an oxygen or nitrogen atom. They can be represented as polymers having the repeating unit

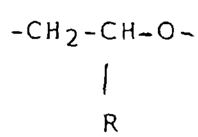

wherein R is hydrogen or a group Ra, $-CH_2ORa$, $-CH_2OReRa$, $-CH_2N(CH_3)_2$ in which Ra is an alkyl group containing to 16 carbon atoms and preferably 1 to 4 carbon atoms or a cycloalkyl group containing 5 to 8 carbon atoms, and Re is an ether group of formula $-CH_2-CH_2Op-$ wherein p is a number from 1 to 100, preferably 1 or 2:

or having the repeating unit

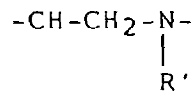

wherein R' is Ra, or ReRa, as defined above; or having the repeating unit

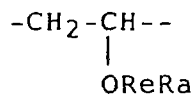

wherein Re and Ra are as defined above.

These polymers are preferably crosslinked to form a network having enhanced mechanical properties and which is sufficiently rigid that agglomeration of the cathode is prevented as the cell is charged, discharged and recharged. Agglomeration leads to a longer diffusion path into the insertion compound and to destruction of the ionically and electronically conducting pathway among the particles.

The polymers may be crosslinked in a number of ways. For example, U.S. Patent 4,357,401 to Andre et al. discloses PEO-PPO copolymers which are crosslinked by ethylene diamine. Where the polymer includes moieties of primary or secondary alcohols or amines, the polymer may be crosslinked by reaction with a crosslinking agent such as a polyisocyanate. Polyethylene oxides may also be crosslinked using a crosslinking agent such as poly(ethylene glycol) diacrylate and a thermal free radical initiator such as 2,2′-azobis(2-methylpropionitrile) as described in our European Patent Application 88310179.2 (Publication No. EP-A-0318161). See also U.S. Patent 3,734,876.

Particularly useful polymerizable compounds for providing a crosslinked conductive polyethylene oxide matrix are obtained by reacting a low molecular weight polyethylene glycol (e.g., 200 to 400 m.w.) with acrylic or methacrylic acid to produce the ethylenically unsaturated ester.

Preferably, the aforementioned polymerizable polyethylenically unsaturated compounds have a molecular weight of about 200 to 2,000 and more preferably 200 to 800. Still more preferably they are liquids at temperatures less than 30°C. Examples of curable materials include polyethyiene glycol-300 diacrylate (average PEO molecular weight about 300), polyethylene glycol-480 diacrylate (average PEO molecular weight about 480) and the corresponding methacrylates.

It may be desirable to include a polymerizable comonomer in the composition to reduce the glass transition temperature and improve the conductivity of the polymer. Any suitable monoacrylate such as tetrahydrofurfuryl acrylate, tetrahydrofurfuryl methacrylate, methoxypolyethylene glycol monomethacrylate, 2-ethoxyethyl acrylate, 2-methoxyethyl acrylate or cyclohexyl methacrylate may be used for this purpose. Triacrylates such at TMPTA, trimethylolpropane ethoxylated triacrylates (TMPEOTA) or trimethylolpropanepropoxy triacrylate may be used to introduce crosslinking. Monoacrylates may be used in an amount of about 5 to 50% by weight based on the total amount of polymerizable material. The triacrylates may be used in amounts of about 2 to 30% by weight on the same basis.

Known thermal polymerization or radiation polymerization techniques may be used to form crosslinked and uncrosslinked polymeric networks useful in practice of the present invention. A conventional photoinitiator or thermal initiator is included in compositions which are cured by heating or exposure to ultraviolet radiation or visible light. Electron beam radiation can be used to cure compositions containing ethylenically unsaturated compounds directly without the addition of an initiator.

Propylene carbonate is present in the electrolyte composition in an amount of at least 65% by weight and preferably 70 to 80% by weight. This criticality is illustrated in the following Table in which conductivity ($ohm^{-1}cm^{-1}$ at 20°) was measured for polymer compositions containing $LiCF_3SO_3$ polyethylene oxide (PEO) and propylene carbonate.

TABLE

| Sample No. | Weight Fraction | | | Ratio | | Conductivity |
|---|---|---|---|---|---|---|
| | Salt | PEO | PC | PC/PEO | PC/salt | |
| 1 | .07 | .23 | .70 | 3.0 | 10.0 | $1.3x10^{-3}$ Invention |
| 2 | .07 | .41 | .51 | 1.2 | 7.3 | $6.0x10^{-4}$ Comparison |
| 3 | .07 | .32 | .60 | 1.8 | 8.6 | $4.8x10^{-4}$ Comparison |
| 4 | .07 | .27 | .66 | 2.4 | 9.4 | $1.0x10^{-3}$ Invention |

The Table shows that substantially higher conductivity is achieved at plasticizer concentrations greater than 65%. The balance of the composition is typically about 5 to 10% salt and 20 to 25% polymer.

The compositions will not form free standing films but this is not necessary if the electrolyte compositions are coated

directly on a support to form the anode or cathode half elements. Not only does this enable one to obtain a solid electrolyte having the high conductivities noted above, but it also enables the formation of a very thin electrolyte element. For example, whereas the electrolyte layers described in the aforementioned European application range from about 200 to 500 μm (microns) in thickness, electrolyte layers produced in accordance with the present invention may be routinely less than 100 microns and preferably 15 to 50 μm (microns) thick.

The three-layer structure (anode, electrolyte and cathode with current collectors) in the form of a sheet, roll, tape, etc. forms a simple cell or battery. Such structures can employ various additional layers, including current conducting backing layers, insulating layers, and/or bipolar electrode connections. Such simple batteries may be connected or combined in stacks to form multi-cell electrochemical devices. Typically, electrochemical cells are formed as simple disc sandwiches. However, large area cells may be fabricated using a "swiss-roll" or "jelly roll" technique around a central mandrel, or a "concertina" configuration, sandwiched between two stainless steel plates. Both of these methods are well-known to the artisan.

Example

A mixture of 23 wt% polyethylene oxide (PEO) 70% of propylene carbonate (PC) and 7% lithium trifluoromethane sulfonate, $LiCF_3SO_3$, was fed in a single screw type extruder equipped with an adjustable ribbon die (opening 50 um). The extruder and the die were maintained at temperature higher than the PEO melting temperature. This mixture was extruded as a continuous solid membrane directly on the electrodes (lithium or $V^6O^{13}$ composite) or on inert support. The electrolyte membrane thickness was about 50 to 75 um, depending on the extrusion speed and the die opening. The ionic conductivity at room temperature is about $1x10^{-3}$ $ohm^{-1}$ $cm^{-1}$.

## Claims

1. An electrolyte composition for a solid state electrochemical cell, comprising: a plasticizer, a thermoplastic or thermoset polymer derived from monomers containing a heteroatom and a dissolved alkali metal salt; the composition being characterised in that the plasticizer is propylene carbonate, the polymer is polyethylene oxide and the salt is $LiCF_3SO_3$; in that propylene carbonate is present in an amount of at least 65% by weight of said composition; and in that said composition has a conductivity of at least about $1x10^{-3}ohm^{-1}cm^{-1}$.

2. An electrochemical cell comprising a lithium anode, a composite cathode of an insertion compound, and a layer of a polymer electrolyte, characterised in that said electrolyte comprises a composition according to Claim 1.

3. A cell according to Claim 2, further characterised in that said layer is less than 100μm (microns) thick.

4. A cell according to Claim 3, further characterised in that said layer is generally in the region of 15 to 50μm (microns) thick.

## Patentansprüche

1. Eine Elektrolytmasse für eine in Festkörpertechnik ausgeführte elektrochemische Zelle, umfassend: einen Weichmacher, ein thermoplastisches oder hitzehärtbares Polymeres, das von Monomeren deriviert ist, die ein Heteroatom und ein aufgelöstes Alkalimetallsalz enthalten; wobei die Masse dadurch gekennzeichnet ist, daß der Weichmacher Propylencarbonat ist, das Polymere Polyäthylenoxid ist und das Salz $LiCF_3SO_3$ ist; dadurch daß Propylencarbonat in einem Anteil von mindestens 65 % nach Gewicht der besagten Masse vorhanden ist; sowie dadurch, daß die besagte Masse ein Leitvermögen von mindestens etwa $1x10^{-3}$ $Ohm^{-1}cm^{-1}$ aufweist.

2. Eine elektrochemische Zelle, umfassend eine Lithiumanode, eine zusammengesetzte Kathode aus einer Einlageverbindung und einer Schicht eines Polymerelektrolyten, dadurch gekennzeichnet, daß der besagte Elektrolyt eine Masse nach Anspruch 1 umfaßt.

3. Eine Zelle nach Anspruch 2, des weiteren dadurch gekennzeichnet, daß die besagte Schicht eine Stärke vonweniger als 100 μm (Mikron) aufweist.

4. Eine Zelle nach Anspruch 3, des weiteren dadurch gekennzeichnet, daß die besagte Schicht im allgemeinen eine Stärke von etwa 15 bis 50 μm (Mikron) aufweist.

## Revendications

**1.** Composition électrolytique pour une pile électrochimique à solide comprenant : un plastifiant, un polymère thermoplastique ou thermodurcissable dérivé de monomères contenant un hétéroatome et un sel de métal alcalin dissous ; la composition étant caractérisée en ce que le plastifiant est du carbonate de propylène, que le polymère est de l'oxyde de polyéthylène et que le sel est du $LiCF_3SO_3$ ; en ce que le carbonate de propylène est présent à raison d'au moins 65% par poids de ladite composition ; et en ce que ladite composition a une conductivité d'au moins $1x10^{-3}ohm^{-1}cm^{-1}$ environ.

**2.** Pile électrochimique comprenant une anode au lithium, une cathode composite d'un composé d'insertion, et une couche d'un électrolyte polymère, caractérisée en ce que ledit électrolyte comprend une composition selon la Revendication 1.

**3.** Pile selon la Revendication 2, caractérisée en outre en ce que ladite couche a une épaisseur inférieure à 100 µm (microns).

**4.** Pile selon la Revendication 3, caractérisée en outre en ce que ladite couche a généralement une épaisseur de l'ordre de 15 à 50 µm (microns).